# EUROPÄISCHE PATENTANMELDUNG

(11) **EP 2 251 137 A1**
(43) Veröffentlichungstag der Anmeldung: **17.11.2010**
(21) Anmeldenummer: 10000145.2
(22) Anmeldetag: 11.01.2010
(51) Int. Cl.: B23Q 1/01, B23Q 1/62

(54) **Werkstückbearbeitungsschlitten zum Bearbeiten eines Werkstücks und Werstückbearbeitungsmaschine mit dem Werkstückbearbeitungsschlitten**

(30) Priorität: 15.05.2009 DE 102009021572
(71) Anmelder: IMA Klessmann GmbH Holzbearbeitungssysteme, 32312 Lübbecke (DE)
(72) Erfinder: Bierenriede, Hartmut, 32351 Stemwede-Oppenwehe (DE)
(74) Vertreter: Schober, Mirko

(57) **Zusammenfassung**

Die vorliegende Erfindung betrifft einen Werkzeugbearbeitungsschlitten (1) zum Bearbeiten eines Werkstücks, der ein Werkzeugaggregat (2) zur Aufnahme eines Werkzeugs (7) und eine Werkzeugführung (41, 42, 43) umfasst, wobei das Werkzeugaggregat (2) entlang der Werkzeugführung (41, 42, 43) verfahrbar ist und die Werkzeugführung (41, 42, 43) zudem als Seitenführung und als ein tragendes Bauteil des Werkstückbearbeitungsschlittens (1) vorgesehen ist. Die vorliegende Erfindung betrifft weiterhin eine Werkzeugbearbeitungsmaschine mit mindestens einem erfindungsgemäßen Werkzeugbearbeitungsschlitten (1).

## Beschreibung

Die vorliegende Erfindung betrifft einen Werkstückbearbeitungsschlitten zum Bearbeiten eines Werkstücks, der eine Werkzeugaufnahme zur Aufnahme eines Werkzeugs und eine Linearführung umfasst, wobei die Werkzeugaufnahme entlang der Linearführung verfahrbar ist. Weiterhin betrifft die vorliegende Erfindung eine Werkstückbearbeitungsmaschine mit mindestens einem erfindungsgemäßen Werkstückbearbeitungsschlitten.

Einen bekannten Stand der Technik einer Durchlaufbohrmaschine mit einem Werkstückbearbeitungsschlitten zeigen die Fig. 3 und 4. Dieser Stand der Technik ist auch in der Druckschrift DE 10 2007 022 702 A1 offenbart. Die Durchlaufbohrmaschine weist eine Bohrstation 1 mit Bohraggregaten 9, 10 zum Anbringen von Vertikalbohrungen senkrecht zu einer Plattenebene eines zu bearbeitenden Werkstücks 2 auf. Die Bohrstation 1 ist entlang einem Traggestell 11.1 in einer sich parallel der Plattenebene erstreckenden X-Richtung verfahrbar. Außerdem sind die Bohraggregate 9, 10 senkrecht zur Plattenebene in eine Z-Richtung sowie in eine sich parallel der Plattenebene erstreckende Y-Richtung verfahrbar. Der Werkstückbearbeitungsschlitten dieser Maschine umfasst sich in Z-Richtung erstreckende senkrecht ausgerichtete Supporte 16, an denen die Bohraggregate 9, 10 gelagert sind, und die ihrerseits auf einem sich in Y-Richtung erstreckenden horizontal ausgerichteten Support 15 gelagert sind. Bei dieser An-ordnung ist die Krafteinleitung sehr ungünstig. Denn in Y-Richtung ist lediglich ein Führungssystem 15 unterhalb der Bohraggregate 9, 10 vorgesehen, was zu einem sehr großen Abstand des Führungssystems 15 zum Werkstück 2 führt, so dass die Bohraggregate 9, 10 schwingen können und sich ein großes toleranzbehaftetes Bohrbild ergibt.

Aufgabe der vorliegenden Erfindung ist es, einen Werkstückbearbeitungsschlitten mit einer verbesserten Bearbeitungsgenauigkeit zu schaffen. Der Werkstückbearbeitungsschlitten soll außerdem möglichst leicht sein und wenig Bauraum einnehmen.

Die Aufgabe wird gelöst mit einem Werkstückbearbeitungsschlitten zum Bearbeiten eines Werkstücks, der ein Werkzeugaggregat zur Aufnahme eines Werkzeugs und eine Werkzeugführung umfasst, wobei das Werkzeugaggregat entlang der Werkzeugführung in und entgegen einer ersten Raumrichtung verfahrbar ist, die parallel einer Bearbeitungsfläche, auf der das Werkstück beim Bearbeiten angeordnet ist, verläuft, und wobei die Werkzeugführung als Seitenführung seitlich dem Werkzeugaggregat vorgesehen und ein tragendes Bauteil des Werkstückbearbeitungsschlittens ist.

Da die Werkzeugführung erfindungsgemäß seitlich des Werkzeugaggregats angeordnet ist, ist der Abstand der Werkzeugführung zum Werkstück erheblich verringert, so dass erheblich geringere Schwingungen des Werkzeugs auftreten und die Bearbeitung eines Werkstücks mit erheblich geringeren Toleranzen möglich ist. Weiterhin ist die Werkzeugführung erfindungsgemäß ein tragendes Bauteil des Werkstückbearbeitungsschlittens. Daher entfallen weitere tragende Bauteile derselben Funktion.

Schließlich kann eine seitlich angeordnete Werkzeugführung sehr schmal gebaut werden, so dass der für diese Ausführungsform benötigte Bauraum sehr klein ist. Insgesamt ist der Werkstückbearbeitungsschlitten mit geringerem Gewicht herstellbar.

In einer bevorzugten Ausführungsform ist die Werkzeugführung ein Teil eines Rahmens des Werkstückbearbeitungsschlittens. Alternativ kann die Werkzeugführung auch in einem Gehäuse des Werkstückbearbeitungsschlittens angeordnet sein.

In einer ebenfalls bevorzugten Ausführungsform umfasst der Werkstückbearbeitungsschlitten mehrere Werkzeugaggregate, die entlang derselben Werkzeugführung in und entgegen der ersten Raumrichtung verfahrbar sind. Besonders bevorzugt sind die mehreren Werkzeugaggregate unabhängig voneinander in und entgegen der ersten Raumrichtung verfahrbar.

Bevorzugt ist das Werkzeugaggregat an einem Support angeordnet, der an der Werkzeugführung gelagert ist. Dabei ist das Werkzeugaggregat bevorzugt umrüstbar und/oder auswechselbar an dem Support angeordnet.

In einer bevorzugten Ausführungsform umfasst der Werkzeugbearbeitungsschlitten mehrere Werkzeugführungen, die sich in der ersten Raumrichtung parallel zueinander erstrecken, und die in einer zweiten und/oder dritten Raumrichtung zueinander versetzt angeordnet sind, wobei die erste, zweite und dritte Raumrichtung jeweils in einem Winkel zueinander angeordnet sind. Durch den Versatz ist es möglich, das Werkzeugaggregat bzw. den Support an zwei gegenüberliegenden Seiten und/oder sowohl im werkstückzugewandten Bereich des Werkzeugaggregates als auch im werkstückabgewandten Bereich des Werkzeugaggregates zu führen. Dadurch ergibt sich eine Halterung an mehreren Punkten, insbesondere an zwei oder drei Punkten, so dass torsionsartige Kräfte, insbesondere während der Bearbeitung eines Werkstücks, vermieden werden und das Bearbeitungsbild weiter verbessert ist.

Die zweite Raumrichtung verläuft vorzugsweise parallel und die dritte Raumrichtung vorzugsweise senkrecht der Bearbeitungsfläche. Ebenfalls bevorzugt sind die erste, die zweite und die dritte Raumrichtung jeweils senkrecht zueinander angeordnet. Besonders bevorzugt erstrecken sich die erste und zweite Raumrichtung sowie die Bearbeitungsfläche horizontal und die dritte Raumrichtung vertikal.

Das Werkzeug ist vorzugsweise ein Bohrer, eine Fräse, eine Säge oder dergleichen. Ebenfalls bevorzugt können mehrere Werkzeuge, insbesondere verschiedene Werkzeuge, am Werkzeugaggregat angeordnet sein. Die Werkzeuge können bevorzugt gleichzeitig, oder weiterhin bevorzugt einzeln und unabhängig voneinander verwendet und insbesondere in der dritten Raumrichtung verfahren werden.

Die Aufgabe wird weiterhin gelöst mit einer Werkstückbearbeitungsmaschine, die mindestens einen erfindungsgemäßen Werkstückbearbeitungsschlitten umfasst, der in der Werkstückbearbeitungsmaschine parallel der zweiten Raumrichtung verfahrbar ist.

Dadurch können ein oder mehrere Werkstückbearbeitungsschlitten in der zweiten Raumrichtung bevorzugt unabhängig voneinander verfahren werden. Besonders bevorzugt ist gleichzeitig ein Verfahren der Werkzeugaggregate in die erste Raumrichtung und/oder in die dritte Raumrichtung möglich. Dies ermöglicht sowohl ein kontinuierliches als auch ein getaktetes Bearbeiten eines Werkstücks im kontinuierlichen oder getakteten Durchlauf.

Im Folgenden wird die Erfindung anhand von **Figuren** beschrieben. Die **Figuren** sind lediglich beispielhaft und schränken den allgemeinen Erfindungsgedanken nicht ein.
- **Fig. 1**: zeigt einen erfindungsgemäßen Werkstückbearbeitungsschlitten in einer Seitenansicht,
- **Fig. 2**: zeigt einen Ausschnitt eines erfindungsgemäßen Werkstückbearbeitungsschlittens im Querschnitt,
- **Fig. 3**: zeigt eine Werkstückbearbeitungsmaschine in Seitansicht mit mehreren Werkstückbearbeitungsschlitten gemäß dem **Stand der Technik,**
- **Fig. 4**: zeigt eine Draufsicht der Werkstückbearbeitungsmaschine gemäß dem **Stand der Technik** der **Fig. 3****.**

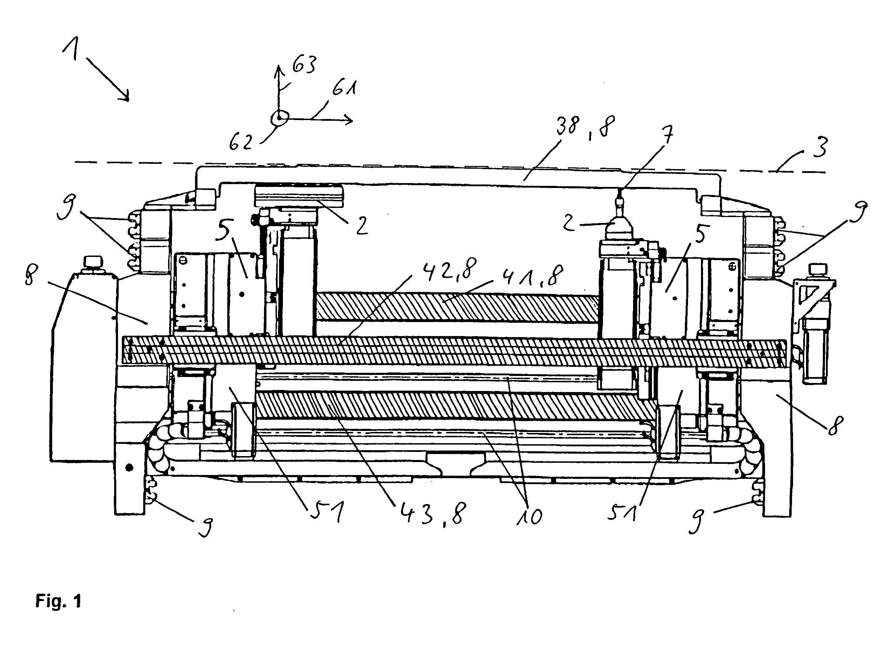

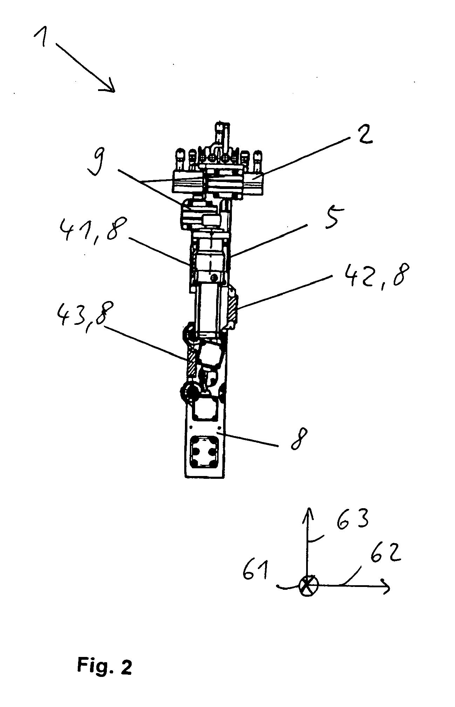

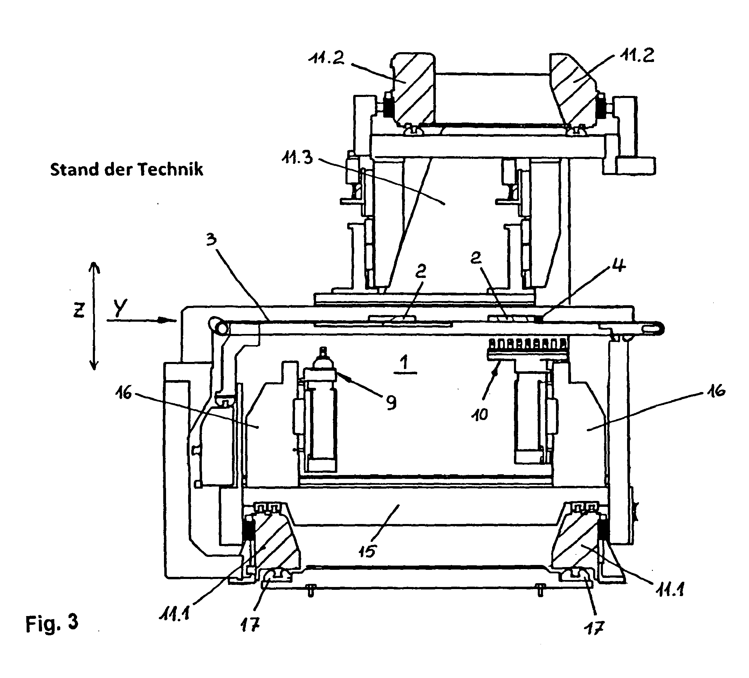

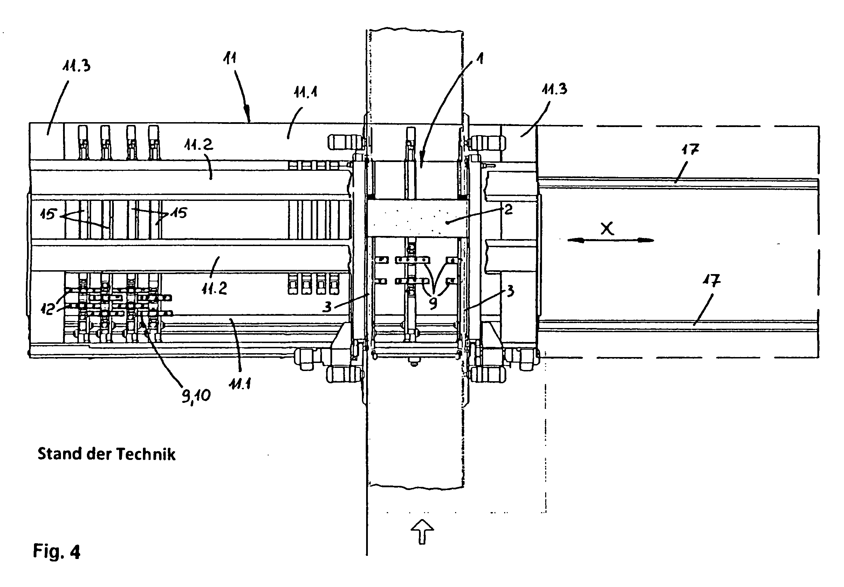

Im Folgenden sind in den **Fig. 1** und **2** gleiche Bauteile mit den gleichen Bezugszeichen versehen. Außerdem sind in den **Fig. 3** und **4****,** die den Stand der Technik zeigen, gleiche Bauteile mit gleichen Bezugszeichen versehen.

**Fig. 1** zeigt einen erfindungsgemäßen Werkstückbearbeitungsschlitten 1 in einer Seitenansicht. Der Werkstückbearbeitungsschlitten 1 umfasst zwei Supporte 5, an denen jeweils ein Werkzeugaggregat 2, hier in beiden Fällen ein Bohraggregat, angeordnet ist. Als Werkzeug 7 des einen Bohraggregates 2 ist ein einzelner Bohrer vorgesehen, während im zweiten Bohraggregat 2 mehrere Bohrer (hier nicht sichtbar) angeordnet sind.

In der hier gezeigten Ausführungsform sind die Supporte 5 und daher auch die Werkzeugaggregate 2 an drei zueinander versetzten und an gegenüberliegenden Seiten der Supporte 5 angeordneten Werkzeugführungen 41, 42, 43 gelagert. Die Werkzeugführungen 41, 42, 43 erstrecken sich parallel einer ersten Raumrichtung 61, die auch als Y-Richtung bezeichnet wird. Sie sind als tragende Teile eines Rahmens 8 des Werkzeugbearbeitungsschlittens 1 vorgesehen. Die Supporte 5 umfassen zum Verfahren der Werkzeug-aggregate 2 in die erste Raumrichtung 61 entlang der Werkzeugführungen 41, 42, 43 Führungswagen 51, die einen Antrieb beispielsweise mittels eines Spindeltriebs mit jeweils einer Spindel 10, insbesondere unabhängig voneinander, ermöglichen.

Zum Bearbeiten eines Werkstücks (hier nicht gezeigt) wird dieses auf einer Bearbeitungsfläche 3 angeordnet. Die Bearbeitungsfläche 3 kann beispielsweise aus einem oder mehreren oberen Rahmenteilen 38 gebildet sein, oder sie kann sich insbesondere oberhalb oder unterhalb eines oberen Rahmenteiles 38 befinden und aus Bestandteilen einer Werkstückbearbeitungsmaschine gebildet sein, die den Werkzeugschlitten 1 umfasst.

Zum Bearbeiten des Werkstücks wird weiterhin das Werkstückaggregat entlang einer dritten Raumrichtung, die auch als Z-Richtung bezeichnet wird, verfahren.

Die hier gezeigte Ausführungsform des Werkstückbearbeitungsschlittens 1 weist Lagerbauteile 9 auf, an denen der Werkstückbearbeitungsschlitten 1 in einer nicht gezeigten Werkstückbearbeitungsmaschine entlang Führungen, die hier ebenfalls nicht gezeigt sind, in eine zweite Raumrichtung 62, die als x-Richtung bezeichnet wird, verfahrbar ist.

Eine Werkstückbearbeitungsmaschine mit einem erfindungsgemäßen Werkstückbearbeitungsschlitten 1 ermöglicht daher das Verfahren der Werkzeugaggregate 2 und/oder Werkzeuge 7 in alle drei Raumrichtungen 61, 62, 63. Daher können mit dieser Werkstückbearbeitungsmaschine Werkstücke sowohl kontinuierlich als auch getaktet bearbeitet werden. Alternativ oder zusätzlich ist es auch denkbar, die Werkstücke in eine oder mehrere Raumrichtungen 61, 62, 63 zu verfahren.

**Fig. 2** zeigt einen Ausschnitt eines erfindungsgemäßen Werkstückbearbeitungsschlittens 1 im Querschnitt. Sichtbar ist ein Bohraggregat 2, das an einem Support 5 angeordnet ist. Weiterhin sind Teile des Rahmens 8 und insbesondere die Werkzeugführungen 41, 42, 43 als Teile des Rahmens 8 erkennbar. Außerdem ist in **Fig. 2** ein Lagerbauteil 9 sichtbar.

Es ist erkennbar, dass ein erfindungsgemäßer Werkstückbearbeitungsschlitten 1 sehr schmal aufgebaut ist.

Ein erfindungsgemäßer Werkstückbearbeitungsschlitten 1 ist beispielsweise in einer Werkstückbearbeitungsmaschine der in der **Fig. 4** gezeigten Art verwendbar. Eine erfindungsgemäße Werkstückbearbeitungsmaschine ist daher eine Durchlaufbohrmaschine zur Bearbeitung von insbesondere plattenförmigen Werkstücken.

Eine erfindungsgemäße Werkstückbearbeitungsmaschine eignet sich insbesondere zur Bearbeitung von Holz, Holzersatzstücken, Glas, Kunststoff, Stein, Metallen und weiteren Materialien sowie zur Bearbeitung von Werkstücken aus mehreren Materialien. Es handelt sich insbesondere um eine Werkstückbearbeitungsmaschine für die holzverarbeitende Industrie.

## Patentansprüche

1. Werkstückbearbeitungsschlitten (1) zum Bearbeiten eines Werkstücks, der ein Werkzeugaggregat (2) zur Aufnahme eines Werkzeugs (7) und eine Werkzeugführung (41, 42, 43) umfasst, wobei das Werkzeugaggregat (2) entlang der Werkzeugführung (41, 42, 43) in eine erste Raumrichtung (61) verfahrbar ist, die parallel einer Bearbeitungsfläche (3), auf der das Werkstück beim Bearbeiten angeordnet ist, verläuft,
**dadurch gekennzeichnet,**
**dass** die Werkzeugführung (41, 42, 43) als Seitenführung seitlich dem Werkzeugaggregat (2) vorgesehen und ein tragendes Bauteil des Werkstückbearbeitungsschlittens (1) ist.

2. Werkstückbearbeitungsschlitten (1) nach einem der vorherigen Ansprüche,
**dadurch gekennzeichnet,**
**dass** die Werkzeugführung (41, 42, 43) ein Teil eines Rahmens (8) des Werkstückbearbeitungsschlittens (1) ist.

3. Werkstückbearbeitungsschlitten (1) nach einem der vorherigen Ansprüche,
**dadurch gekennzeichnet,**
**dass** er mehrere Werkzeugaggregate (2) umfasst, die entlang derselben Werkzeugführung (41, 42, 43) in der ersten Raumrichtung (61) verfahrbar sind.

4. Werkstückbearbeitungsschlitten (1) nach einem der vorherigen Ansprüche,
**dadurch gekennzeichnet,**
**dass** das Werkzeugaggregat (2) an einem Support (5) angeordnet ist, der an der Werkzeugführung (41, 42, 43) gelagert ist.

5. Werkstückbearbeitungsschlitten (1) nach einem der vorherigen Ansprüche,
**dadurch gekennzeichnet,**
**dass** er mehrere Werkzeugführungen (41, 42, 43) umfasst, die sich in der ersten Raumrichtung (61) parallel zueinander er-trecken, und die in einer zweiten und/oder dritten Raumrichtung (62, 63) zueinander versetzt angeordnet sind, wobei die erste, zweite und dritte Raumrichtung (61, 62, 63) jeweils in einem Winkel zueinander angeordnet sind.

6. Werkstückbearbeitungsschlitten (1) nach einem der vorherigen Ansprüche,
**dadurch gekennzeichnet,**
**dass** die zweite Raumrichtung (62) parallel und die dritte Raumrichtung (63) senkrecht der Bearbeitungsfläche (3) verläuft.

7. Werkstückbearbeitungsschlitten (1) nach einem der vorherigen Ansprüche,
**dadurch gekennzeichnet,**
**dass** das Werkzeug (7) ein Bohrer, eine Fräse, eine Säge oder dergleichen ist.

8. Werkstückbearbeitungsmaschine, die mindestens einen Werkstückbearbeitungsschlitten (1) nach einem der vorherigen Ansprüche umfasst,
**dadurch gekennzeichnet,**
**dass** der Werkstückbearbeitungsschlitten (1) in der Werkstückbearbeitungsmaschine parallel der zweiten Raumrichtung (62) verfahrbar ist.
